# EUROPÄISCHE PATENTSCHRIFT

(11) **EP 0 423 179 B1**
(45) Veröffentlichungstag und Bekanntmachung des Hinweises auf die Patenterteilung: **28.04.1993**
(21) Anmeldenummer: 89907709.3
(22) Anmeldetag: 29.06.1989
(51) Int. Cl.: C09K 19/38, C08F 20/30

(54) **FERROELEKTRISCHE FLÜSSIGKRISTALLINE POLYMERE, EIN VERFAHREN ZU IHRER HERSTELLUNG UND IHRE VERWENDUNG IN ELEKTROOPTISCHEN BAUTEILEN**
FERROELECTRIC LIQUID-CRYSTAL POLYMERS, PROCESS FOR PRODUCING SAME AND THEIR USE IN ELECTRO-OPTICAL COMPONENTS
POLYMERES FERROELECTRIQUES A CRISTAUX LIQUIDES, LEUR PROCEDE DE PRODUCTION ET LEUR UTILISATION DANS DES COMPOSANTS ELECTRO-OPTIQUES

(30) Priorität: 08.07.1988 DE 3823154
(43) Veröffentlichungstag der Anmeldung: 24.04.1991
(73) Patentinhaber: HOECHST AKTIENGESELLSCHAFT, 65926 Frankfurt am Main (DE)
(72) Erfinder: SCHEROWSKY, Günter, D-1000 Berlin 33 (DE); SCHLIWA, Andreas, D-1000 Berlin 21 (DE); TRAPP, Wolfgang, D-1000 Berlin 12 (DE)
(86) Internationale Anmeldenummer: EP8900747
(87) Internationale Veröffentlichungsnummer: WO9000586

(56) Entgegenhaltungen:
- EP-A- 0 228 703
- Molecular Crystals & Liquid, vol. 157, April 1988 Gordon & Breach Sciences Publ. SA (Montreux, CH) N.Koide et al. :"Synthesis and thermal properties of side chain type liquid crystalline polymers with chiral unit in the flexible moiety", see page 152; page 156, table 1
- Molecular Crystals & Liquid Crystals, vol.137, Nrs. 1-4, July 1986, Gordon & Breach Sciences Publ. SA (US) J.-C. Dubois et al.:"Liquid crystalline side chin polymers derived from poly-acrylate, poly-methyacrylate and poly-chloroacrylate" pages 394-364, see pages 349,350,363

## Beschreibung

### Ferroelektrische flüssigkristalline Polymere, ein Verfahren zu ihrer Herstellung und ihre Verwendung in elektrooptischen Bauteilen

Flüssigkristalle haben in jüngerer Zeit Eingang in verschiedene technische Gebiete gefunden, in denen bestimmte elektro-optische Eigenschaften (z. B. kleine Ansteuerspannungen) in Verbindung mit bestimmten Anforderungen an Anzeige- oder Schaltvorrichtungen (z.B. flache Bauweise, geringes Gewicht) gefragt sind. Diese Vorrichtungen beruhen z.Z. auf dielektrischen Ausrichtungseffekten in nematischen, cholesterischen und/oder smektischen Flüssigkristallphasen, wobei die Lichtdurchlässigkeit oder -reflektivität der Vorrichtung von der angelegten elektrischen Spannung abhängt.

Ein Flüssigkristalldisplay besteht aus zwei Trägerplatten, vorzugsweise Glasplatten, die mit transparenten Elektroden und in der Regel mit einer oder zwei Orientierungsschichten beschichtet sind, zwischen denen sich die Flüssigkristallschicht befindet. Als weitere Komponenten sind Polarisatoren, Farbfilter, Passivierungs-, Antireflex-, Diffisionssperr- u.ä. Schichten gebräuchlich.

Während derzeit noch überwiegend nematische oder chloesterische Flüssigkristallphasen verwendet werden, haben seit einigen Jahren in zunehmendem Maße auch ferroelektrische, insbesondere smektische C*, Flüssigkristallphasen an Bedeutung gewonnen. Ferroelektrische Flüssigkristalle besitzen den Vorteil sehr kurzer Schaltzeiten und ermöglichen den Betrieb von hochauflösenden Bildschirmen ohne Zuhilfenahme elektronischer Elemente, wie z.B. Dünnschichttransistoren, die bei der Verwendung nematischer oder chloresterischer Flüssigkristallphasen erforderlich sind.

Bei allen genannten Anwendungen handelte es sich um niedermolekulare flüssigkristalline Verbindungen, d.h. mit Molmassen unterhalb von 2000 g/mol, vorzugsweise unterhalb von 800 g/mol, insbesondere aber nicht um Polymere, Copolymere, Polykondensate oder Copolykondensate. Wegen ihrer geringeren Viskosität besitzen niedermolekulare Flüssigkristalle im allgemeinen den Vorteil kurzer Schaltzeiten; dies gilt insbesondere für ferroelektrische Flüssigkristalle, deren Schaltzeiten im Bereich von µs liegen und die damit 10 bis 1000 mal schneller schalten als konventionelle nematische Flüssigkristallphasen.

Bei der Anwendung ferroelektrischer Flüssigkristalle kann jedoch das Problem der hohen Anfälligkeit der 15 Orientierung hinsichtlich mechanischer Beanspruchung (Stoß, Schlag, Druck, thermische Verformung, Verbiegung usw.) auftreten, was zu einer irreversiblen Störung der Bildqualität eines Displays führen kann. Diese hohe Empfindlichkeit erschwert derzeit den Bau flexibler ferroelektrischer LC-Displays und verteuert die Herstellung konventioneller, d.h. mit Glas oder starren Kunststoffplatten versehenen, Displays.

Wegen ihrer geringeren Deformierbarkeit und besseren Verarbeitbarkeit ist die Verwendung polymerer Flüssigkristalle vorteilhaft.

Polymere Flüssigkristalle wurden bereits mehrfach beschrieben (z.B. J. Polym.Sci. Polym.Lett., Ed. 13, 243 (1975); Polym.Bull. 6, 309 (1982)), jedoch weisen die bislang beschriebenen polymeren Flüssigkristalle für praktische Zwecke zu langsame Schaltzeilen auf.

Ferroelektrische, schnellschaltende polymere Flüssigkristalle sollten sich daher zur Herstellung flexibler Displays besonders eignen.

Besonders vorteilhaft wäre die Produktion einer Displayfolie in einem kontinuierlichen Prozeß, wozu jedoch schnell schaltende polymere ferroelektrische Flüssigkristalle benötigt werden. In EP 0 228 703 wurden mit einer umfassenden allgemeinen Formel eine Vielzahl von ferroelektrischen flüssigkristallinen Polymeren beschrieben. Die Schaltzeiten der genannten Beispiele betragen jedoch zwischen 10 und 100 Millisekunden.

Die vorliegende Erfindung bezieht sich auf ferroelektrische polymere Flüssigkristalle, die unter den allgemeinen Anspruch der genannten Anmeldung fallen, jedoch in jeder Seitenkette des Polymers als besonderes strukturelles Merkmal ein chirales Kohlenstoffatom enthalten, das direkt über ein Sauerstoffatom an den Phenylring des Mesogens gebunden ist.
Die erfindungsgemäßen Polymere besitzen Schaltzeiten, die deutlich kürzer sind als die in EP 0 228 7 03 genannten.

Die neuen Polymere bestehen aus wiederkehrenden Einheiten der Formel (I): 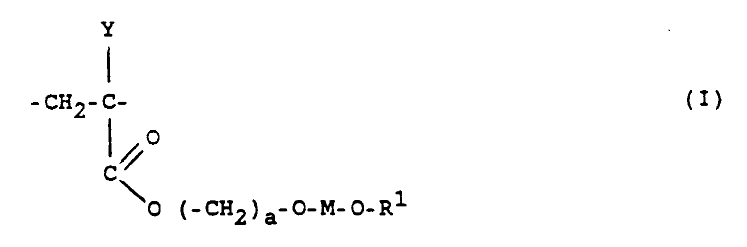
wobei
- Y: = H, CH₃
- a: = eine ganze Zahl von 6 bis 12
- M: = eine Gruppe der nachstehenden Formeln

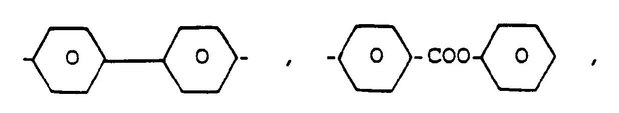

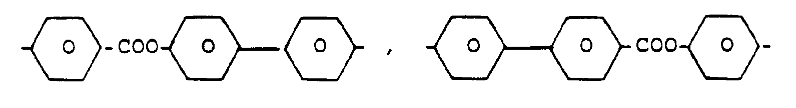

und 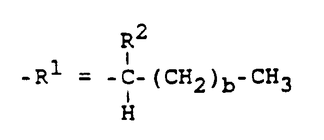
mit -R² = -CH₃, -Cl und b = eine ganze Zahl von 1 bis 10 bedeuten.
Bevorzugt wird dabei ein ferroelektrisches flüssigkristallines Polymer, bei dem
Y = H und
R² = CH₃
bedeuten und a,b,R¹ die obengenannten Bedeutungen haben.

Die überraschend kurzen Schaltzeiten der erfindungsgemäßen Polymere kommen dadurch zustande, daß die Polymere selbst oder in Mischung mit anderen LC-Komponenten eine orthogonale smektische Phase ausbilden und in dieser Phase ein elektroklines Spalten möglich ist.

Seit einigen Jahren ist der sog. elektrokline Effekt in der chiralen smektischen A-Phase (S*_{A}-Phase) bekannt, der sich zur Lichtmodulation ausnutzen läßt (S. Garoff und R.B. Meyer, Phys. Rev. Lett. 38, 848 (1977). Wenn man ein elektrisches Feld parallel zu den Schichten einer chiralen S_{A}-Phase (S*_{A}-Phase) anlegt, so neigen sich die Moleküle in der an sich orthogonalen Phase. Der Neigungswinkel ϑ zwischen dem Direktor n̂ und der Schichtennormalen ẑ ist dem angelegten Feld E proportional. Der elektrokline Koeffizient (d ϑ : d E) gibt die Stärke der linearen Kopplung zwischen der Neigungskoordinate und dem Feld an.

In der von Clark und Lagerwall vorgeschlagenen "bookshelf"-Anordnung (N.A. Clark und S.T. Lagerwall, Appl. Phys. Lett. 36, 899 (1980)) kann der elektro-optische Effekt ferroelektrischer Flüssigkristalle ausgenutzt werden. Deren Charakteristika wie Bistabilität, spontane Polarisation und Phasenverdrillung sind den hier besprochenen orthogonalen Phasen wesensfremd. Der elektrokline Effekt geht von einem im feldfreien Raum monostabilen Zustand aus und ergibt beim Anlegen eines Feldes eine für kleine Winkel lineare und für große Winkel schwach gekrümmte elektro-optische Kennlinie. Die Kennlinie des ferroelektrischen Schaltens ist dagegen stark nichtlinear.
Der elektrokline Effekt kann als eine kontinuierlich durch das Feld gesteuerte Auslenkung des Neigungswinkels aufgefaßt werden.

Da der elektrokline Effekt zum schnellen Schalten in einem flüssigkristallinen Medium ausgenutzt werden kann, sind die erfindungsgemäßen Polymere bestehend aus wiederkehrenden Einheiten der Formel (I) zur Verwendung in elektro-optischen Schalt- und Anzeigeelementen besonders geeignet. Dabei bietet sich sowohl die Verwendung des reinen Polymers wie auch die Verwendung des Polymers in einer Mischung an.

Die Herstellung der Verbindungen erfolgt durch radikalische Polymerisation von Monomeren der Formel (II)

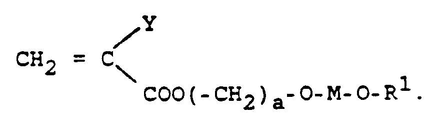

Die Monomere sind nach bekannten Methoden darstellbar.

### Beispiel 1

### Darstellung des Monomeren

a) 0,1 mol der Verbindung der Formel HO-(CH₂)₁₁-OH wurden unter kontinuierlicher Perforation über 24 h bei 85° C mit 0,2 mol HBr (48 %ig) in 300 ml Petrolether (Sdp. 80 - 120° C) umgesetzt. Nach Abziehen des Lösemittels und Destillation am Kugelrohr erhielt man die Verbindung der Formel

   HO-(CH₂)₁₁-Br (I)

   in einer Ausbeute von 80 %.
b) 0,05 mol der Verbindung I und 0,05 mol p-Hydroxybenzoesäure wurden in 250 ml Wasser und in Anwesenheit von 0,1 mol KOH und 1 mol-% Kaliumiodid bei einer Ölbadtemperatur von 100° C 48 h lang gerührt. Danach wurde abgekühlt, und mit 10 %iger HCl angesäuert. Das ausgefallene Produkt der Formel 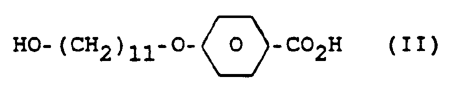 wurde abfiltriert und aus Aceton umkristallisiert. Die Ausbeute lag bei 68 %
c) 0,03 mol der Verbindung II wurden in 200 ml Tetrahydrofuran und 0,05 mol Triethylamin gelöst, und bei 0 bis 20° C wurden 0,05 mol Acrylsäurechlorid zugetropft. Es wurde 2 h bei Raumtemperatur nachgerührt, 50 ml Wasser zugegeben und 3 ml mit jeweils 70 ml CH₂Cl₂ extrahiert. Nach Trocknen über MgSO₄ und Abziehen des Dichlormethan erhielt man die Verbindung der Formel 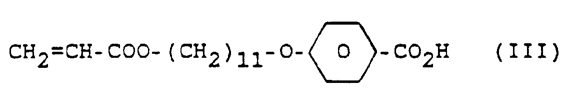 die aus einem Ether/Petrolether-Gemisch umkristallisiert wurde, Ausbeute 71 %.
d) 30 mmol 4,4'-Dihydroxybiphenyl wurden in 120 ml CH₂Cl₂ und 42 mol Dimethylamin gelöst. Dazu wurden bei Raumtemperatur 42 mmol Trimethylchlorsilan zugetropft und 1 h nachgerührt. Anschließend wurden 20 mol der Verbindung III, gelöst in 50 ml CH₂Cl₂, und danach eine Lösung von 20 mmol Di-cyclohexylcarbodiimid und 3 mmol Dimethylaminopyridin in CH₂Cl₂ zugegeben. Es wurde 26 h bei Raumtemperatur nachgerührt. Der Niederschlag wurde abgesaugt und aus schwach salzsaurem Ethanol umkristallisiert. Ausbeute: 40% der Verbindung der Formel 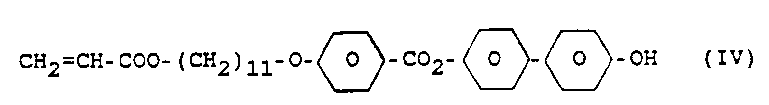
e) Zu einer Lösung von 5 mmol der Verbindung IV, 5 mmol der Verbindung der Formel 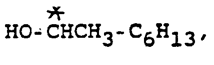 5 mmol Triphenylphosphin in 50 ml Tetrahydrofuran wurden bei O - 5° C unter Rühren und Ausschluß von Feuchtigkeit 5 mmol Azo-dicarbonsäure-di-ethylester langsam zugetropft. Es wurde dann noch 30 Minuten bei 0 - 5° C und 48 h bei Raumtemperatur nachgerührt. Anschließend wurde das Lösemittel abgezogen und der Rückstand mit 10 ml CH₂Cl₂ versetzt, filtriert und das Filtrat durch Chromatographie an 60 g Kieselgel mit Dichlormethan/Petrolether 1:1 gereinigt. Aus dem Eluat wurde die Verbindung der Formel 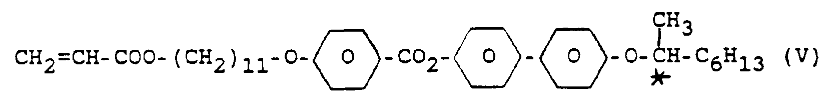 durch Abziehen des Lösemittels isoliert. Ausbeute: 55 %.

Das Monomer (V) zeigt folgende Phasenfolge:
K 57,1 S_{X} 62,2 S_{C}* 75,4 S_{A} 92,3 N* 93,3 BP_{I} 95,3 BP_{II} 95,41

### Polymerisation

2 mmol der Verbindung V wurden in 10 ml absolutem Tetrahydrofuran gelöst. Während 10 Minuten wurde Stickstoff eingeleitet und dann wurde eine Lösung von 0,02 mmol Azoisobuttersäurenitril in Tetrahydrofuran zugegeben. Es wurde unter einer Stickstoffatmosphäre bei 60° C 8 Stunden lang gerührt. Die Aufarbeitung des erhaltenen Polymerisats kann durch 8 bis 10-maliges Umfällen mit Methanol aus einer Lösung in Tetrahydrofuran erfolgen (Ausbeute: 58 %), es kann jedoch auch auf chromatografischem Weg in Fraktionen mit unterschiedlicher mittlerer Molmasse getrennt werden.

Das Polymer Ia weist eine mittlere Molmasse M_{w} = 210.000 (bezogen auf den Standard Polystyrol) auf und eine Molekulardispersität E = M_{w}/Mₙ = 3,09.
Dieses Polymer zeigt folgende Phasenfolge:
T_{G} 50 S_{B} 92 S_{X} 125 S_{C}* 142 S_{A} 151

Die Schaltzeit dieses Polymers beträgt bei einer Temperatur von 137° C und einer Spannung von 10 Volt (2ηm-Zelle) 7 Millisekunden. Bei einer Temperatur von 125° C beträgt die Schaltzeit bei 10 bis 40 Volt konstant 1 Millisekunde (elektroklines Schalten).

Das Polymer Ib weist eine mittlere Molmasse M_{w} = 15.000 auf und eine Molekulardispersität E = M_{w}/Mₙ = 1,50.

Dieses Polymer besitzt folgende Phasenfolge:
T_{G} 50 S_{B} 92 S_{X} 123 S_{C}* 142 S_{A} 1461

Die Schaltzeit beträgt bei Temperaturen zwischen 130° C und 140° C 220 bis 392 Mikrosekunden. Bei 117 bis 123° C wird elektroklines Schalten beobachtet.

### Beispiel 2

### Darstellung des Monomeren

a) 30 mmol 4,4'-Dihydroxybiphenyl wurden in 150 ml Tetrahydrofurasn und 42 mmol Diethylamin gelöst. Dazu wurden bei Raumtemperatur 42 mml Trimethylchlorsilan zugetropft und 1 h nachgerührt. Anschließend wurden 20 mmol der Verbindung II, (s. Beispiel 1 a) und 1 b) gelöst in 50 ml CH₂Cl₂, und danach eine Lösung von 20 mmol Di-cyclohexylcarbodiimid und 3 mmol Dimethylaminopyridin in CH₂Cl₂ zugegeben. Es wurde 26 h bei Raumtemperatur nachgerührt. Der Niederschlag wurde abgesaugt und aus schwach salzsaurem Ethanol umkristallisiert. Ausbeute: 40 % der Verbindung der Formel 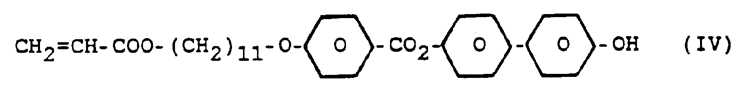 Ausbeute: 52 %.
b) 5 mmol der Phenolkomponente IV wurden mit 5 mmol der Alkoholkomponente der Formel HO-CHCH₃-C₆H₁₃ unter den gleichen Bedinungen umgesetzt wie in Beispiel 1 e) beschrieben. Man erhielt in einer Ausbeute von 55 % die Verbindung der Formel 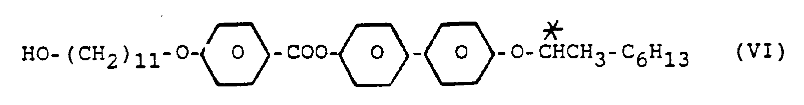
c) 2,5 mmol der Verbindung VI wurden in 20 ml Tetrahydrofuran und 5 mmol Triethylamin gelöst und unter den in Beispiel 1c angegebenen Bedingungen mit 5 mmol Acrylsäurechlorid umgesetzt. Ausbeute: 80 % der Verbindung der Formel

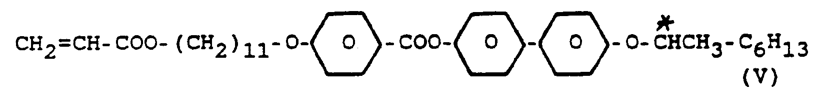

### Polymerisation

Die Polymerisation dieser Verbindung V erfolgte wie unter Beispiel 1 beschrieben.

## Patentansprüche

1. Ferroelektrisches flüssigkristallines Polymer bestehend aus wiederkehrenden Einheiten der Formel I 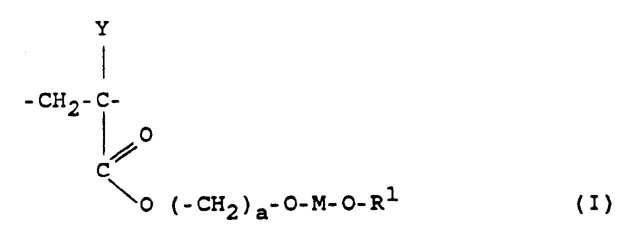 wobei
Y = H, CH₃
a = eine ganze Zahl von 6 bis 12
M = eine Gruppe der nachstehenden Formeln 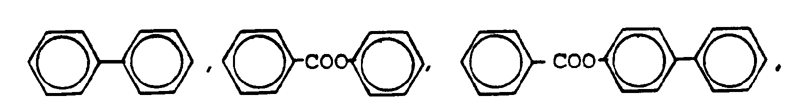 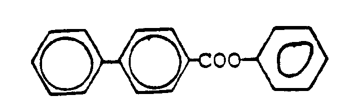
und 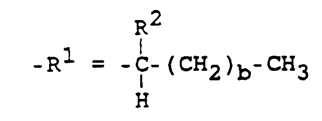 mit - R² = -CH₃, -Cl
und b = eine ganze Zahl von 1 bis 10 bedeuten.

2. Ferroelektrisches flüssigkristallines Polymer nach Anspruch 1, dadurch gekennzeichnet,
daß
Y = H und
R²= CH₃
bedeuten.

3. Verwendung eines flüssigkristallinen Polymers gemäß Formel I aus Anspruch 1 alleine oder in Mischung mit anderen Komponenten in, auf der Ausnutzung des elektroklinen Effektes in flüssigkristallinen Medien beruhenden, elektrooptischen Schalt- und Anzeigeelementen.

4. Verwendung eines flüssigkristallinesn Polymers gemäß Formel I aus Anspruch 2 alleine oder in Mischung mit anderen Komponenten in, auf der Ausnutzung des elektroklinen Effektes in flüssigkristallinen Medien beruhenden elektrooptischen Schalt- und Anzeigeelementen.

5. Elektrooptisches Schalt- und Anzeigeelement enthaltend ein Polymer nach Anspruch 1 oder 2.

## Claims

1. A ferroelectric, liquid-crystalline polymer composed of repeating units of the formula I 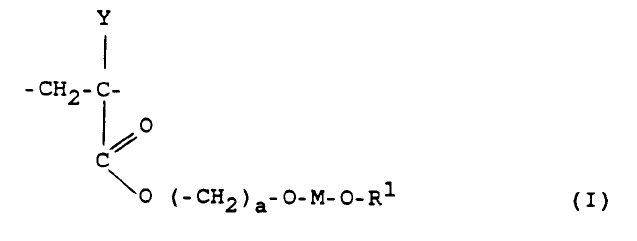 in which
Y = H or CH₃
a = an integer from 6 to 12
M = a group selected from the formulae which follow: 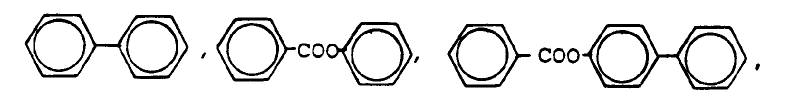 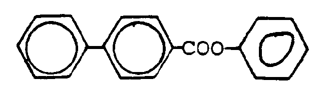
and 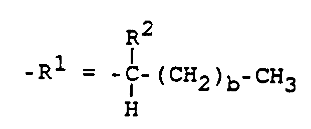 where -R² = -CH₃ or -Cl
and b = an integer from 1 to 10.

2. The ferroelectric, liquid-crystalline polymer as claimed in claim 1, wherein
Y = H and
R² = CH₃.

3. The use of a liquid-crystalline polymer according to formula I of claim 1 alone or as a mixture with other components in electrooptical switch and display elements which work on the basis of the electroclinic effect in liquid-crystalline media.

4. The use of a liquid-crystalline polymer according to formula I of claim 2 alone or as a mixture with other components in electrooptical switch and display elements which work on the basis of the electroclinic effect in liquid-crystalline media

5. An electrooptical switch and display element containing a polymer as claimed in claim 1 or 2.

## Revendications

1. Polymère ferro-électrique, à propriétés de cristaux liquides, ce polymère consistant en des motifs récurrents de formule I 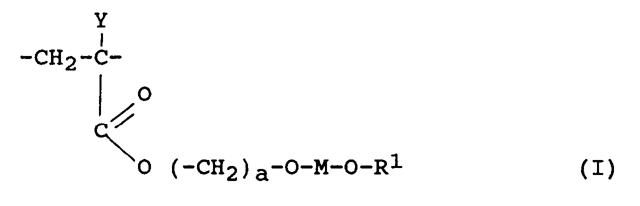 dans laquelle
Y représente H ou CH₃;
a est un nombre entier valant 6 à 12,
M est un groupe répondant aux formules suivantes 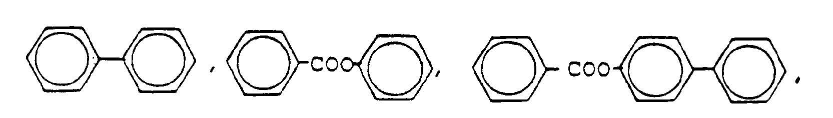 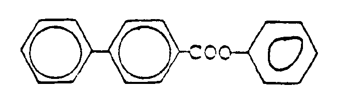 et 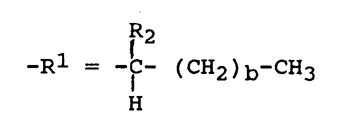 avec - R² représentant -CH₃, -Cl et ,
b étant un nombre entier valant 1 à 10.

2. Polymère ferro-électrique à propriétés de cristaux liquides selon la revendication 1, caractérisé en ce que
Y représente H et ,
R² représente CH₃.

3. Utilisation d'un polymère à propriétés de cristaux liquides, selon la formule I de la revendication 1, isolément ou en mélange avec d'autres composants, dans des éléments électro-optiques de commutation et d'affichage reposant sur l'utilisation de l'effet électrocline dans des milieux à propriétés de cristaux liquides.

4. Utilisation d'un polymère à propriétés de cristaux liquides selon la formule I de la revendication 2, isolément ou en mélange avec d'autres composants, dans des éléments électro-optiques de commutation et d'affichage reposant sur l'utilisant de l'effet électrocline dans des milieux à propriétés de cristaux liquides .

5. Eléments électro-optiques de commutation et d'affichage, contenant un polymère selon la revendication 1 ou 2.
